(19) Europäisches Patentamt / European Patent Office / Office européen des brevets

(11) **EP 2 310 233 B1**

(12) **EUROPÄISCHE PATENTSCHRIFT**

(45) Veröffentlichungstag und Bekanntmachung des Hinweises auf die Patenterteilung:
**12.03.2014 Patentblatt 2014/11**

(21) Anmeldenummer: **09779447.3**

(22) Anmeldetag: **12.05.2009**

(51) Int Cl.:
*B60R 21/00* (2006.01)     *B60R 21/0132* (2006.01)
*B60W 30/04* (2006.01)

(86) Internationale Anmeldenummer:
**PCT/EP2009/055709**

(87) Internationale Veröffentlichungsnummer:
**WO 2010/003715 (14.01.2010 Gazette 2010/02)**

(54) **VERFAHREN UND STEUERGERÄT ZUR ERKENNUNG EINER SEITEN- UND/ODER DACHLAGE EINES FAHRZEUGS**

METHOD AND CONTROL DEVICE FOR DETECTING A LATERAL POSITION OF A VEHICLE AND/OR A POSITION OF A VEHICLE WHEN IT LANDS ON ITS ROOF

PROCÉDÉ ET APPAREIL DE COMMANDE DESTINÉS À LA DÉTECTION DU RENVERSEMENT LATÉRAL ET/OU DU CAPOTAGE D'UN VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **09.07.2008 DE 102008040295**

(43) Veröffentlichungstag der Anmeldung:
**20.04.2011 Patentblatt 2011/16**

(73) Patentinhaber: **Robert Bosch GmbH**
**70442 Stuttgart (DE)**

(72) Erfinder:
- **DOERR, Alfons**
  **70597 Stuttgart (DE)**
- **WALZ, Volker**
  **74372 Sersheim (DE)**
- **RITTLER, Stephan**
  **Urbach**
  **73660 (DE)**

(56) Entgegenhaltungen:
**WO-A-01/79036     DE-A1-102004 031 665**

EP 2 310 233 B1

**Beschreibung**

Die vorliegende Erfindung betrifft ein Verfahren zur Erkennung eines Seiten- und/oder einer Dachlage eines Fahrzeugs sowie ein Steuergerät gemäß den Hauptansprüchen.

Durch die zunehmende Anzahl von Rückhaltemitteln im Insassenschutz (z.B. Gurtstraffer, mehrstufige Airbags, etc.) werden die Anforderungen an den zugehörigen Auslösealgorithmus immer komplexer. Nicht zuletzt die Adaptivität von Rückhaltemitteln (z.B. mehrstufige Airbags, Active Venting) verlangt einen Algorithmus, der aus den zur Verfügung stehenden Sensorsignalen unterschiedliche Crashschweren bzw. unterschiedliche Crashtypen errechnet (Crashdiskriminierung) bzw. in der Lage ist Crashsituationen detailliert zu erkennen. Zur Minimierung der Systemkosten ist es wünschenswert, dass der Auslösealgorithmus mit Informationen von möglichst wenigen Sensoren auskommt.

Ein bekanntes Verfahren zur Erkennung von Crashs betrifft die Verwendung von Beschleunigungssignalen, die mit Hilfe von Kennlinien separiert werden.

Die DE 102006019316 A1 zeigt eine Vorrichtung zur Ansteuerung von Personenschutzmitteln, wobei die Vorrichtung eine Einrichtung zur Erfassung von einer Mehrzahl von fahrdynamischen Daten sowie eine Innenraumsensorik und eine Auswerteschaltung aufweist. Die Auswerteschaltung steuert Personenschutzmittel derart an, dass ein Herausschleudern eines Fahrzeuginsassen verhindert wird, wobei dabei das Signal der Innenraumsensorik und die Mehrzahl von fahrdynamischen Daten berücksichtigt werden.

Die DE 10 2004 031 665 A1 zeigt eine Fahrzeugüberschlag-Erfassungsvorrichtung enthält Sensoren zum Erfassen der Lateralbeschleunigung, der Vertikalbeschleunigung und der Wankwinkelgeschwindigkeit des Fahrzeugs; einen Abschnitt zum Berechnen des Wankwinkels des Fahrzeugs durch Integrieren der Wankwinkelgeschwindigkeit; einen Abschnitt zum Durchführen der Nullkorrektur des Wankwinkels des Fahrzeugs gemäß der Lateralbeschleunigung und der Wankwinkelgeschwindgkeit; einen Abschnitt zum Erfassen des Modes des Überschlags aus der zusammengesetzten Beschleunigung aus der Lateralbeschleunigung und der Vertikalbeschleunigung; einen Abschnitt zum Entscheiden über eine Überschlagserfassungsschwellenkarte des Fahrzeugs gemäß dem Mode des Überschlags; einen Abschnitt zum Entscheiden über das Entwicklungsmaß des Überschlags aus der zusammengesetzten Beschleunigung; einen Abschnitt zum Korrigieren des Schwellenwerts der Karte unter Verwendung des Entwicklungsmaßes; und einen Abschnitt zum Entscheiden über das Auftreten des Überschlags aus der Karte, deren Schwellenwert korrigiert ist.

Die WO 01/79036 A offenbart Mittel, die vorgesehen sind, um eine einfache, möglichst zuverlässige Plausibilisierung einer Überrollentscheidung durchzuführen, welche Plausibilität der Überrollentscheidung signalisieren, wenn entweder eine in Richtung der Hochachse des Fahrzeugs gemessene Beschleunigung oberhalb eines vorgegebenen oberen Schwellwertes oder unterhalb eines vorgegebenen unteren Schwellwertes liegt, oder wenn die in Richtung der Hochachse gemessene Beschleunigung zwischen den beiden Schwellen liegt, aber gleichzeitig eine in Richtung der Querachse des Fahrzeugs gemessene Beschleunigung eine Schwelle überschreitet, welche von der in Richtung der Hochachse gemessenen Beschleunigung abhängt.

Die vorliegende Erfindung schafft ein Verfahren zur Erkennung einer Seiten- und/oder Dachlage eines Fahrzeugs, wobei das Verfahren die folgenden Schritte umfasst:

- Empfangen des Lateral- und/oder Vertikalwerts über eine Schnittstelle, wobei der Lateralwert eine Lateralbeschleunigung und/oder der Vertikalwert eine Vertikalbeschleunigung repräsentiert;
- Erkennen der Dachlage des Fahrzeugs, wenn der Vertikalwert oder ein aus dem Vertikalwert abgeleiteter Lagewert zumindest mit einer Komponente absolut größer ist, als ein vorbestimmter Vertikalschwellenwert und/oder Erkennen der Seitenlage des Fahrzeugs, wenn sich ein aus dem Vertikalwert und dem Lateralwert abgeleiteter Lagewert in einem Seitenlagebereich eines Zustandsraumes befindet, wobei der Zustandsraum durch Achsen bezüglich einer lateralen und einer vertikalen Beschleunigung aufgespannt ist.

Gemäß einer weiteren Ausführungsform der Erfindung ist ein Steuergerät mit Einrichtungen zur Durchführung des vorstehenden Verfahrens oder einer Variante davon vorgesehen.

Die vorliegende Erfindung basiert auf der Erkenntnis, dass die Erkennung eines Überschlags auf einfache Art und Weise aus den Signalen der Beschleunigungssensoren in laterale und/oder vertikale Richtung möglich ist. An Hand einer Auswertung des Vertikalwerts kann somit auf einfache Art und Weise ein Überschlag festgestellt werden, ohne auf Daten eines Rollraten-Sensors zurückgreifen zu müssen. Für die Erkennung einer Seitenlage des Fahrzeugs werden die Werte dieser Signale verknüpft und diese Verknüpfung in Form eines Lagewertes in einem Zustandsraum interpretiert. Diese Auswertung unter Verwendung des Zustandsraums bietet damit eine deutlich präzisere Feststellung einer Seitenlage des Fahrzeugs als die Schwellwert-basierte Auswertung von einzelnen Signalen, da nicht nur die einzelnen Beschleunigungssignale sondern zusätzlich auch verschiedene Kombinationen der Werte dieser beiden Beschleunigungssignale (oder daraus abgeleiteter Werte) berücksichtigt werden. Als SeitenlageBereich des Zustandsraumes wird dabei ein Bereich betrachtet, der sich in einem Bereich der maximalen bzw. minimalen auftretenden lateralen Beschleunigungswerte bewegt, da in diesem Bereich die größte Wahrscheinlichkeit für eine aufgetretene Seitenlage des Fahrzeugs liegt. Zu beachten ist hierbei jedoch, dass das erfindungsgemäße Verfahren lediglich auf bereits zur Verfügung gestellten Lateral- und Vertikalwerten aufsetzt und diese Werte nicht zwingend erst durch das erfindungsgemäße Verfahren bereitgestellte werden müssen. Aus diesem Grund ist es ausreichend, dass der Lateral- und Vertikalwert lediglich über eine beliebig ausgestaltete Schnittstelle zur Verfügung gestellt (d.h. empfangen) werden.

Der Vorteil der vorliegenden Erfindung besteht darin, dass lediglich Signale von Beschleunigungssensoren in lateraler (das heißt y-Richtung) und/oder vertikaler Richtung (das heißt z-Richtung) bereitgestellt werden brauchen, die beispielsweise auch Steuerimpulse für das zentrale Airbag-Steuergerät liefern. Somit können im Fahrzeug meist schon vorhandene Sensoren weiter eingesetzt werden. Die Rollbewegung des Fahrzeugs während des Überschlags braucht nicht erfasst zu werden, so dass auch kein Rollratensensor im Fahrzeug vorgesehen werden braucht. Der Fokus der Überschlagerkennung liegt allein auf der Feststellung, dass (beispielsweise im Vorfeld) ein Fahrzeugüberschlag stattgefunden hat. Dadurch ist die Funktionalität der Überschlagerkennung mit minimaler Sensorausstattung realisierbar, weil die sonst für die Überschlagerkennung benötigten Rollraten-Sensoren nicht erforderlich sind. Weiterhin nimmt die Robustheit der Situationserkerung mit fortschreitender Unfalldauer zu, da auch eine zeitliche Auswertung der Verweildauer des Lagewerts in einem Bereich des Zustandsraums möglich ist. Mit zunehmender zeitlicher Länge der Auswertung wird daher die Erkennung der Lage des Fahrzeugs sicherer. Ein weiterer Vorteil der vorliegende Erfindung kann darin gesehen werden, dass nicht nur Postcrashsituationen erkannt werden können, bei denen das Fahrzeug sich auf der Seite wurde in einer Dachlage befindet, sondern prinzipiell durch Auswertung des Lagewerts auch eine vorausgegangene 360°-Drehung erkannt werden kann. Dies bedeutet, dass bei Postcrashzuständen, in denen das Fahrzeug nach einem Überschlag wieder auf den Rädern steht, der Fahrzeugüberschlag nachträglich auch noch erkannt werden kann. Durch die Separierung der unterschiedlichen Postcrashzustände können dann unterschiedliche Maßnahmen ergriffen werden.

Um eine einfache Auswertung eines Überschlags, der meist in einer Rollbewegung erfolgt, durchzuführen, kann in einer günstigen Ausführungsform der Erfindung im Schritt des Erkennens der Lagewert unter Verwendung einer Kreisgleichung bestimmt werden. Hierdurch beschreibt der Lagewert im Zustandsraum eine Kreisbahn, so dass der Seitenlagebereich und ein Dachlagebereich, bei dem zumindest eine Komponente des Lagewerts größer als der Vertikalschwellenwert ist, einfach im Zustandsraum markiert werden können. Eine Erkennung der Lage des Fahrzeugs wird dadurch vereinfacht.

Günstig ist es auch, wenn im Schritt des Erkennens der Seitenlage ein Seitenlagebereich im Zustandsraum verwendet wird, dessen Komponenten in Richtung einer vertikalen Beschleunigung einen geringeren absoluten Wert als den Vertikalschwellenwert aufweisen. Dies ermöglicht eine eindeutige Zuordnung, ob sich das Fahrzeug in einer Seitenlage oder einer Dachlage befindet, um entsprechend geeignete Maßnahmen einleiten zu können.

In einer weiteren Ausführungsform der Erfindung wird im Schritt des Erkennens der Seitenlage ein in einen ersten und einen zweiten Teilbereich geteilter Seitenlagebereich verwendet, um das Fahrzeug auf der ersten Seite liegend zu erkennen, wenn sich der Lagewert im ersten Teilbereich befindet und um das Fahrzeug auf der der ersten Seite gegenüberliegenden zweiten Seite liegend zu erkennen, wenn sich der Lagewert im zweiten Teilbereich befindet, wobei die Komponenten des ersten Teilbereichs in Richtung der lateralen Beschleunigung ein anderes Vorzeichen aufweisen, als die entsprechenden Komponenten des zweiten Teilbereichs. Dies bietet den Vorteil, dass nicht nur erkannt werden kann, dass das Fahrzeug auf der Seite liegt, sondern auch auf welcher Seite das Fahrzeug liegt. Entsprechend können dann evtl. unterschiedliche Sicherheitsmaßnahmen getroffen werden wie zum Beispiel speziell das Freischalten und/oder Öffnen der zugänglichen (d.h. freiliegenden) Türe.

Auch kann gemäß einer anderen Ausführungsform der Erfindung im Schritt des Erkennens ein Lagewert verwendet werden, bei dem ein Lateral-Offsetwert zum Lateralwert berücksichtigt wird und/oder bei dem ein Vertikal-Offsetwert zum Vertikalwert berücksichtigt wird. Hierdurch kann eine Verfälschung der Lageerkennung beispielsweise durch die grundsätzlich vorhandene Erdanziehungsbeschleunigung oder eine Seitenbeschleunigung bei einer Kurvenfahrt kompensiert werden, so dass im Wesentlichen die Überrollbewegung aus den Signalen der entsprechenden Beschleunigungssensoren extrahiert wird.

Besonders günstig ist es, wenn im Schritt des Erkennens die Seitenlage dann erkannt wird, wenn sich der Lagewert für eine vorbestimmte Seitenlage-Zeitdauer in dem Seitenlagebereich des Zustandsraumes befindet und/oder dass die Dachlage dann erkannt wird, wenn der Vertikalwert oder der Lagewert für eine vorbestimmte Dachlage-Zeitdauer in zumindest einer Komponente einen Wert annimmt, der größer als der Vertikalschwellenwert ist. Hierdurch wird sichergestellt, dass sich das Fahrzeug auch in dem erkannten Lagezustand (d.h. auf der Seite oder auf dem Dach) stabilisiert hat, wenn der Vertikalwert oder Lagewert mindestens für die entsprechende Seitenlage-Zeitdauer oder die Dachlage-Zeitdauer in dem entsprechenden Seitenlage- bzw. Dachlagebereich im Zustandsraum bleibt. Dies ermöglicht eine zuverlässigere Erkennung der Fahrzeugsituation nach einem Unfall, so dass die jeweils geeignete Sicherheitsfunktionalität (die evtl. irreversibel ausgelöst wird) auch nutzbringend aktiviert werden kann.

Ferner kann auch im Schritt des Erkennens eine aufrechte Position des Fahrzeugs erkannt werden, wenn sich der Lagewert zwar im Seitenlagebereich befunden hat aber sich nach der vorbestimmten Seitenlage-Zeitdauer nicht mehr im Seitenlagebereich befindet und/oder wenn sich der Vertikalwert oder der Lagewert zwar mit zumindest einer Komponente einen Wert angenommen hat, der größer als der Vertikalschwellenwert war, aber nach der vorbestimmten Dachlage-Zeitdauer mit der zumindest einen Komponente einen Wert angenommen hat, der nicht mehr größer als der Vertikalschwellenwert ist. Durch eine solche Auswertung der Verweildauer des Lagewertes im Seitenlage- bzw. Dachlagebereich kann folglich auch ein vorausgehender Überschlag erkannt werden, bei dem aber das Fahrzeug wieder in die Normalstellung zurückgekippt ist. Ein solcher Überschlag mit nachfolgendem Zurückkippen in die Normallage des Fahrzeugs erfordert jedoch auch besondere Vorsichtsmaßnahmen, da beispielsweise durch den Überschlag die Fahrzeugtüren verklemmt sein könnten, und eine spezielle Freischaltung dieser Türen oder eine Einschaltung der Innenraumbeleuchtung des Fahrzeugs möglicherweise eine Personenrettung unterstützen kann.

Besonders günstig ist eine Ausführungsform der Erfindung, bei der im Schritt des Erkennens der Seitenlage und/oder des Erkennens der Dachlage die Seitenlage und/oder die Dachlage nur dann erkannt werden, wenn sich der Lagewert innerhalb eines vordefinierten ringförmigen Bereichs im Zustandsraum befindet. Dieser ringförmige Bereich kann ein Plausibilitätsbereich im Zustandsraum sein, bei dem die Lagewerte in dem ringförmigen Bereich durch physikalisch mögliche Sensordatenkombinationen beim Überschlag erreicht werden können. Wenn also ein Lagewert ermittelt wird, der nicht innerhalb des ringförmigen Bereichs liegt, ist mit hoher Wahrscheinlichkeit davon auszugehen, dass ein Fehler bei der Bestimmung des Lagewertes aufgetreten ist und dass eine Lageerkennung des Fahrzeugs nicht zuverlässig möglich ist.

Auch kann ferner ein Schritt des Aktivierens einer Sicherheitsfunktion vorgesehen sein, wenn im Schritt des Erkennens eine Seitenlage und/oder eine Dachlage des Fahrzeugs erkannt wurden. Beispielsweise kann die Aktivierung der Sicherheitsfunktion ein Öffnen der Türschlösser, ein Ansteuern einer Innenraumbeleuchtung des Fahrzeugs und/ oder ein Stoppen des Fahrzeugmotors umfassen. Ein solches Aktivieren eines Sicherheitsmittels direkt nach dem Erkennen der Lage des Fahrzeugs bietet den Vorteil, dass die Sicherheit bzw. Rettungsmöglichkeit von Personen nach einem Unfall deutlich erhöht werden kann.

Weiterhin ist es gemäß einer Ausführungsform der Erfindung möglich, dass im Schritt des Empfangens des Lateral- und/oder Vertikalwertes das Empfangen dieser Werte von einem Wertespeicher für den Lateral- und/oder Vertikalwert erfolgt. Dies ermöglicht die Auswertung einer Fahrzeugbewegung im Offline-Betrieb, wenn beispielsweise nach der Auslösung von Sicherheitsfunktionen wie Airbags eine Verbesserung der Personensicherheit in einer Ruhelage des Fahrzeugs (beispielsweise auf der Seite oder auf dem Dach liegend) bereitgestellt werden soll. Dies kann dann durch einfache Auswertung der Signale (oder davon abgeleiteter Größen) von bereits vorhandenen Sensoren erfolgen, so dass keine kostenintensive Zusatzausstattung des Fahrzeugs erforderlich ist.

Auch kann gemäß einer Ausführungsform der vorliegenden Erfindung ein Computerprogramm mit Programmcode zur Durchführung von Schritten eines der vorstehenden Verfahren vorgesehen sein, wenn das Computerprogramm auf einer Datenverarbeitungsanlage ausgeführt wird. Als Datenverarbeitungsanlage können insbesondere ein Mikroprozessor, ein Mikrocontroller, ein digitaler Signalprozessor, ein anwenderspezifischer integrierter Schaltkreis (ASIC) oder ein ähnlicher elektronischer Baustein verwendet werden. Hierdurch lassen sich die erforderlichen Berechnungen numerisch oder schaltungstechnisch effizient ausführen.

Kurze Beschreibung der Zeichnungen

Die Erfindung wird nachstehend anhand der beigefügten Figuren beispielhaft näher erläutert. Es zeigt:

Fig. 1 ein schematisches Blockschaltbild eines Ausführungsbeispiels der vorliegenden Erfindung;
Fig. 2 eine Darstellung des Funktionsprinzips der Erkennung der Dachlage eines Fahrzeugs unter Verwendung eines Zustandsraumes;
Fig. 3 eine Darstellung des Funktionsprinzips der Erkennung der Seitenlage eines Fahrzeugs unter Verwendung des Zustandsraumes; und
Fig. 4 ein Ablaufdiagramm eines weiteren Ausführungsbeispiels der vorliegenden Erfindung als Verfahren.

Eventuell angegebene Dimensionen und Maße sind nur exemplarisch, so dass die Erfindung nicht auf diese Dimensionen und Maße beschränkt ist. Gleiche oder ähnliche Elemente sind mit gleichen oder ähnlichen Bezugszeichen versehen. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden können oder sie zu weiteren, hier nicht explizit beschriebenen Kombinationen zusammengefasst werden können.

Ausführungsformen der Erfindung

Die vorliegende Erfindung dient unter anderem dem Ziel, eine Postcrashsituation zu erkennen. Insbesondere soll die Postcrashsituation erkannt werden, in der sich das Fahrzeug nach einem Überschlag auf dem Dach oder der Seite befindet.

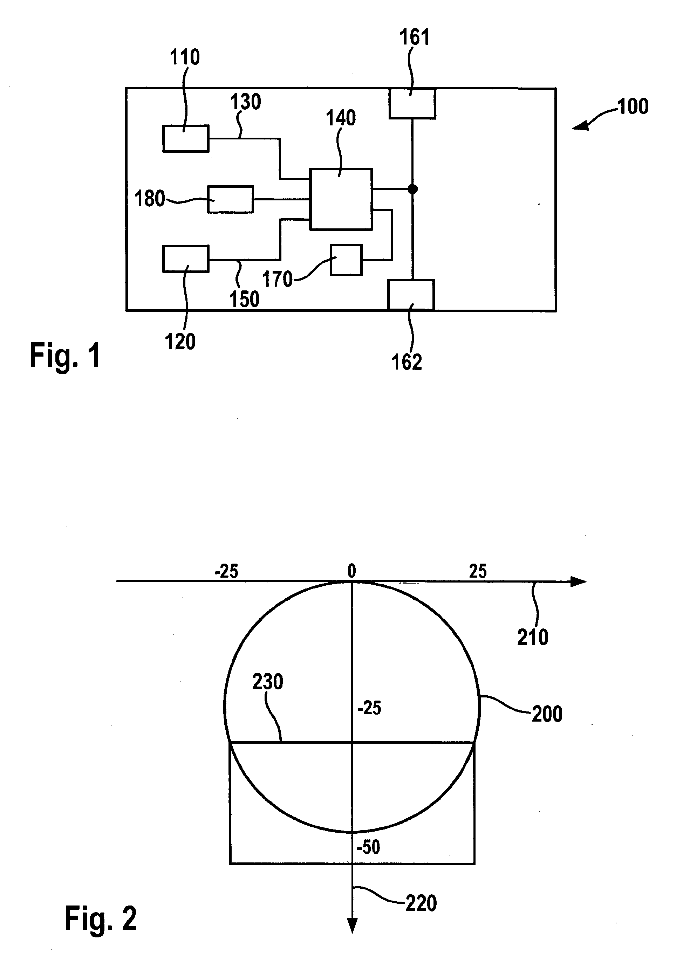

Hierzu kann ein Fahrzeug 100 einen ersten Beschleunigungssensor 110 und einen zweiten Beschleunigungssensor 120 umfassen, wie es in Figur 1 dargestellt ist. Der erste Beschleunigungssensor 110 kann ausgebildet sein, um eine laterale bzw. horizontale Beschleunigung des Fahrzeugs 100 zu messen, wogegen der zweite Beschleunigungssensor 120 ausgebildet sein kann, um eine vertikale Beschleunigung des Fahrzeugs 100 zu erfassen. Insbesondere bei einer Drehung des Fahrzeugs 100 um dessen Längsachse treten immer vertikale Beschleunigungskomponenten auf, die sich mit dem zweiten Beschleunigungssensor 120 erfassen lassen. Der erste Beschleunigungssensor 110 gibt ein der lateralen Beschleunigung entsprechendes erstes Beschleunigungssignal 130 aus, dessen Wert als Lateralwert einer Datenverarbeitungsanlage 140 zugeführt und dort verarbeitet wird. Analog kann der zweite Beschleunigungssensor 120 ausgebildet sein, um ein in der vertikalen Beschleunigung entsprechendes zweites Beschleunigungssignal 150 auszugeben, dessen Wert als Vertikalwert ebenfalls der Datenverarbeitungsanlage 140 zugeführt und dort verarbeitet wird. Die Datenverarbeitungsanlage kann dabei ein beliebiges elektronisches Bauelement beispielsweise ein Mikrocontroller, ein Mikroprozessor, ein digitaler Signalprozessor, ein anwenderspezifischer integrierter Schaltkreis (ASIC) oder ein ähnliches elektronisches Bauelement sein, welches eine Verarbeitung des Lateral- und Vertikalwerts auf numerische oder schaltungstechnische Weise durchführen kann. Die Datenverarbeitungseinheit 140 kann auch als Steuergerät ausgeführt sein, welches unter anderem eine Funktionalität aufweist, um ansprechend auf den Lateral- und/oder Vertikalwert einen Airbag oder anderes Personenrückhaltemittel vor oder beim Unfall auszulösen. Somit können der erste und zweite Beschleunigungssensor 110 und 120 Teil einer Airbag-Auslösesteuerung sein, dessen Daten für die vorliegende Erfindung jedoch weiterverwendet werden können.

Gemäß einem Ausführungsbeispiel der vorliegenden Erfindung ist die Datenverarbeitungseinheit 140 ausgebildet, um aus dem Lateralwert und dem Vertikalwert der (beispielsweise bereits für andere Sicherheitsfunktionen eines Fahrzeugs vorhandenen) Beschleunigungssensoren 110 und 120 eine Lage des Fahrzeugs zu erkennen, um weitere Sicherheitsmittel aktivieren oder Sicherheitsmaßnahmen einleiten zu können. Insbesondere kann durch die Datenverarbeitungseinheit 140 mit dem nachstehend näher beschriebenen Verfahren eine Seitenlage und/oder eine Dachlage des Fahrzeugs nach einem Überschlag erkannt werden. Nach dem Erkennen einer Seitenlage des Fahrzeugs 100 kann beispielsweise ein Entriegelungssignal an ein erstes Türschloss 161 und/oder an ein zweites Türschloss 162 gesandt werden, um die entsprechenden Türen des Fahrzeugs 100 zu entriegeln. Hiermit kann sichergestellt werden, dass Rettungskräfte leichter eine im Fahrzeuginnenraum eingeschlossene Person erreichen. Weiterhin kann alternativ oder zusätzlich durch die Datenverarbeitungseinheit 140 ein Signal zur Einschaltung einer Fahrzeuginnenraumbeleuchtung 170 gegeben werden, um einerseits einer Person in dem Fahrzeug 100 die Orientierung zu erleichtern und andererseits bei Dunkelheit Rettungskräfte durch die größere beleuchtete Fläche im Innenraum des Fahrzeugs auf das verunglückte Fahrzeug 100 aufmerksam zu machen. Zusätzlich oder alternativ kann durch die Datenverarbeitungseinheit 140 bei einem Erkennen einer Seitenlage und/oder einer Dachlage des Fahrzeugs auch der Motor 180 des Fahrzeugs 100 abgeschaltet werden, um ankommende Rettungskräfte nicht durch sich noch drehende Räder des Fahrzeugs 100 zu gefährden, so dass eine Rettung der Insassen des Fahrzeugs schneller ablaufen kann. Die vorstehend beschriebenen Maßnahmen müssen nicht alle bei einer erkannten Seitenlage bzw. Dachlage des Fahrzeugs 100 durchgeführt werden; vielmehr kann beispielsweise bei einer erkannten Seitenlage des Fahrzeugs 100 auch lediglich dasjenige Türschloss 161 bzw. 162 freigeschaltet werden, dessen zugehörige Türen nicht durch das umgestürzte Fahrzeuge blockiert ist. Auch kann in einer anderen Ausführungsform der Motor 180 speziell bei einer Dachlage des Fahrzeugs 100 abgeschaltet werden, da in diesem Fall alle angetriebenen Räder keine Bodenhaftung haben und sich drehen können.

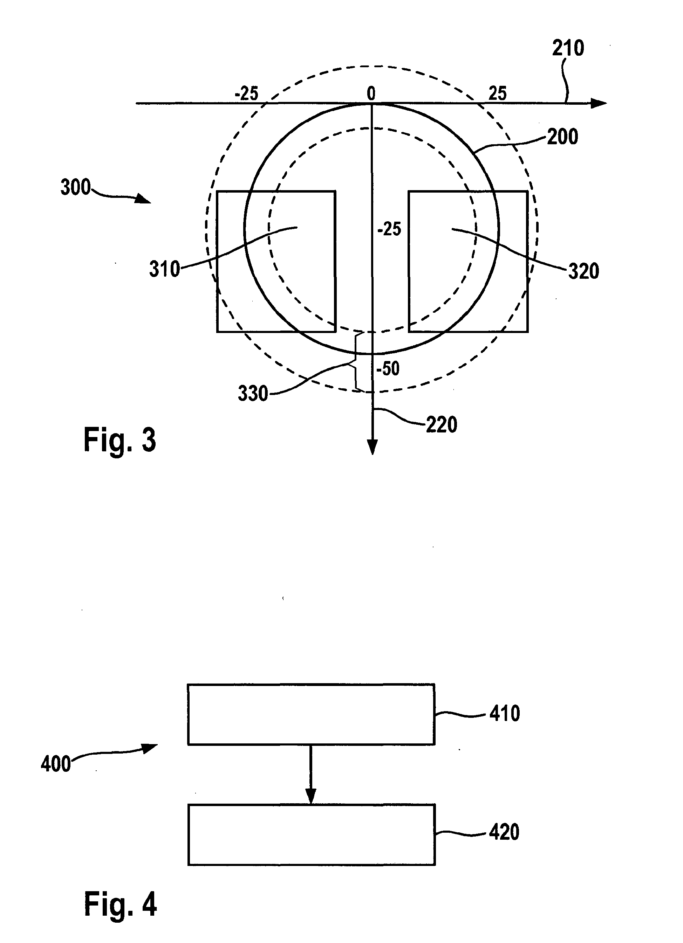

Nachfolgend wird nun die Ermittlung der Seitenlage bzw. der Dachlage des Fahrzeugs gemäß einem Ausführungsbeispiel der vorliegenden Erfindung an Hand der Figuren 2 und 3 detaillierter beschrieben. In diesen Figuren ist das Grundprinzip der FIS-Funktionen in verschiedenen Diagrammen dargestellt.

Fig. 2 zeigt ein qualitatives Diagramm eines Ausführungsbeispiels der vorliegenden Erfindung, bei dem die Erkennung der Dachlage eines Fahrzeugs abgebildet wird. Die Beschleunigung in laterale Richtung wird auf einer nach rechts weisenden y-Achse 210 dargestellt und die vertikale Beschleunigung wird auf einer nach unten weisenden z-Achse 220 dargestellt. Durch diese y- und z-Achsen 210 bzw. 220 wird ein Zustandsraum aufgespannt, der für die weiteren Betrachtungen verwendet wird. Durch die entsprechenden Beschleunigungssensoren 110 und 120 wird für die laterale Beschleunigung ein Lateralwert 130 ermittelt und für die vertikale Beschleunigung ein Vertikalwert 150 ermittelt wobei aus dem Lateralwert 130 und dem Vertikalwert 150 unter Verwendung einer nachfolgend näher beschriebenen Gleichung ein Lagewert 200 in dem Zustandsraum bestimmt wird. Alle möglichen Lagewerte 200, die bei einem Überschlag auftreten können, sind in Figur 2 als Kreisbahn dargestellt.

Das Grundprinzip der Zustandserkennung des Fahrzeugs besteht darin, dass für die Dachlage-Erkennung eine Auswertung des Signal des Beschleunigungssensors in Vertikalrichtung (Vertikalsignals) derart erfolgt, dass, wenn das Vertikalsignal (oder ein hieraus abgeleiteter Merkmalswert; z-Beschleunigungssignal) die dargestellte Schwelle 230 (Vertikalschwellwert) schneidet, beispielsweise ein Flag gesetzt wird, welches aussagt, dass sich das Fahrzeug 100 auf dem Dach befindet. Um die Dachlage zu erkennen, ist es somit nicht erforderlich, tatsächlich einen Lagewert 200 auf der Kreisbahn zu bestimmen, sondern entweder nur den Vertikalwert 150 oder lediglich die Komponente des Lagewertes 200 in Richtung der vertikalen Beschleunigung (d.h. in z-Richtung) auszuwerten. Die Ausnutzung der Kreisbahndarstellung im vorliegenden Ausführungsbeispiel wird in Fig. 2 im Wesentlichen deshalb verwendet, weil für die Auswertung der Seitenlage eine Kreisgleichung benötigt wird und auch die Dachlage-Erkennung unter Verwendung einer solchen Kreisbahnanordnung der Lagewerte 200 ermittelt werden kann. Somit kann unter Verwendung der Kreisbahn der Lagewerte 200 aus den Vertikal-150 und Lateralwerten 130 sowohl die Seiten- als auch die Dachlage des Fahrzeugs 100 erkannt werden, obwohl dies für die Erkennung der Dachlage des Fahrzeugs 100 nicht zwingend erforderlich ist.

Die Seitenlage-Erkennung kann durch eine Auswertung der Lagewerte 200 der Kreisbahn entsprechend Fig. 3 erfolgen. Hierfür wird ein Seitenlagebereich 300 (mit den beiden Teilbereichen 310 und 320) vorgesehen, so dass, wenn sich der aus dem Vertikal- 150 und Lateralwert 130 bestimmte Lagewert 200 in diesem Seitenlagebereich 300 befindet, die Seitenlage des Fahrzeugs 100 erkannt werden kann. Auch kann beispielsweise eine Seitenlage des Fahrzeugs 100 auf der rechten oder linken Seite erkannt werden, je nachdem in welchen der Teilbereiche 310 und 320 sich der ermittelte Lagewert 200 befindet. Hierdurch lassen sich präzisere Sicherheitsfunktionen für die entsprechende Seitenlage, wie zum Beispiel die Freischaltung von entsprechenden, nicht durch das Fahrzeug 100 blockierte Türen ermöglichen. Auch kann ein Überlappungsbereich zwischen den entsprechenden Dach- und Seitenlagebereichen vorgesehen sein, so dass beispielsweise erkannt werden kann, dass sich das Fahrzeug "schräg" auf dem Dach befindet.

Die Seitenlage-Erkennung kann somit allgemein durch den folgenden Zusammenhang beschrieben werden: Schneidet das y-Beschleunigungssignals 130 und das errechnete Signal aus z den Zustandsraum in einem Seitenlagebereich (entsprechend den Bezugszeichen 300, 310 und 320 in Fig. 3) dann wird ein Flag gesetzt, welches die Seitenlage des Fahrzeugs anzeigt.

Um eine größere Sicherheit zu erlangen, dass das Fahrzeug 100 tatsächlich auf dem Dach oder auf der Seite liegt, kann auch ein Zeitmesser (Timer) gestartet werden, wenn sich der Lagewert 200 bzw. einer der entsprechenden Vertikal- 150 oder Lateralwerte 130 in dem Bereich des Zustandsraums befindet, der eine Dach- oder Seitenlage charakterisiert. Ist nach einer vordefinierten Dachlage-Zeitdauer (von beispielsweise 1 s) der Lagewert 200 bzw. der Vertikalwert 150 noch in dem Bereich des Zustandsraumes, der eine Dachlage kennzeichnet (d.h. in dem Bereich mit absoluten Werten auf der z-Achse, die größer als der Vertikalschwellenwert 230 sind) wird das Fahrzeug 100 als auf dem Dach liegend erkannt. Befindet sich der Lagewert 200 nach einer vordefinierten Seitenlage-Zeitdauer (von beispielsweise 1 s) noch innerhalb des Seitenlagebereichs 300, insbesondere noch in demjenigen Teilbereich 310, 320 des Seitenlagebereichs, in dem er sich zu Beginn der Zeitmessung befunden hat, wird die Seitenlage des Fahrzeugs 100 erkannt. Somit ist sichergestellt, dass die entsprechenden Sicherheitsmittel, die evtl. irreversibel ausgelöst werden, nicht unnötig verwendet werden, wenn sich das Fahrzeug beispielsweise noch im. Überrollvorgang befindet.

Die Zustandsentscheidung kann also allgemein als auf folgenden Gleichungen beruhend angesehen werden:

- Dachlage Erkennung:

$$\text{DachFlag} = (-\text{Acc}_z < \text{Par\_FISAccZ}) \ \& \ (\text{Timer1} > \text{Par\_Timer1Wert}) \qquad (1)$$

- Seitenlage Erkennung:

Offset = FISOffset

$$Y^2 = [(\text{Acc}_z + \text{FISOffset})^2 - (\text{Radius})^2] \qquad (2)$$

SeitenFlag = [(-Y2<FISKreisY)&(| YgemSign.| > FISY)] & (Timer1 >

$$\text{Par\_Timer1Wert}) \qquad (3)$$

wobei die Variable "DachFlag" das Flag zur Markierung einer Dachlage, "$\text{Acc}_z$" eine Beschleunigung oder ein davon abgeleiteter Wert in vertikale (d.h. z-) Richtung, "Par_FISAccZ" einen Vertikalschwellenwert, ab dessen Erreichen eine Dachlage des Fahrzeugs erkannt werden soll, "&" eine logische UND-Verknüpfung, "Timer1" einen Messzählerstand des Zeitmessers, "Par_Timer1Wert" eine vordefinierte Dachlage-und/oder Seitenlage-Zeitdauer, nach dessen Ablauf erst eine Dach- und/oder Seitenlage erkannt werden soll, "Offset" eine Variable zur Berücksichtigung eines Offset-Wertes in vertikale Richtung, "FISOffset" einen vordefinierten Offset in z-Richtung, der beispielsweise durch die Erdanziehung verursacht wird und dessen außer-Acht-lassen eine fehlerhafte Bestimmung der Dach- bzw. Seitenlage verursachten würde und "SeitenFlag" das Flag zur Markierung, dass das Fahrzeug eine Seitenlage aufweist bezeichnet. Die Variable "Radius" bildet einen Radius des Kreises ab, der für den Idealfall bekannt ist. Die Variable "FISY" stellt einen Schwellwert für das gemessene y-(bzw. Y-) Signal dar. Die Variable "YgemSign." stellt ein gemessenes Y-Signal dar. Die Variable "FISKreisY" stellt ein berechnetes $Y^2$-Signal aus dem gemessenen z-(bzw. Z-) Signal dar.

Die vorstehend genannte Offsetkorrektur wird benötigt, um den Kreis in den Nullpunkt des Koordinatensystems zu verlagern, da sich die Sensoren bei normalem Stand des Fahrzeugs nullen. Für die y-Richtung ist dies nicht notwendig, für die z-Richtung sollte eine Beschleunigung (Offset) von 1 g berücksichtigt werden.

$Y^2$ bildet ein errechnetes Y-Signal ab, welches dann mit dem gemessenen Y-Wert (d.h. "YgemSign.") verifiziert wird. Durch $Y^2$ wird der Zustandsraum definiert welcher für die Seitenerkennung dient. Welche Seite als Seitenlage des Fahrzeugs erkannt wird, wird über das Vorzeichen des gemessenen Y-Signals definiert. Verglichen wird das gemessene Y-Signal zum Quadrat, mit dem errechneten Y^2. Das errechnete Signal miss in einem Vertrauensbereich um das gemessene Y^2 liegen. Der Vertrauensbereich ist über Parameter definierbar.

Alternativ kann auch eine Bestimmung des Zustandsraums für die Seitenerkennung ohne Gleichung 2 bestimmt werden. Hierfür sollte für $Y^2$ das gemessene Y-Signal ("YgemSign.") eingesetzt werden und der Parameter "FISKreisY" sollte auf die entsprechenden Werte kalibriert werden.

Die Neuheit dieser Funktionen ist die Verwendung der Kreisgleichung (3) zur Zustandserkennung der Seitenlage.

Zur Verifizierung, ob sich das Fahrzeug nun wieder auf den Rädern befindet oder eine stabile Lage auf dem Dach/der Seite eingenommen hat, wird beispielsweise, sobald Bedingung (1) oder (2) erfüllt sind, ein zweiter Timer (d.h. ein zweiter Zeitmesser) gestartet. Der zweite Timer läuft über einen einstellbaren Zeitraum. Nach der abgelaufenen Zeit werden die Bedingungen (1) und (2) erneut überprüft. Sind sie erfüllt, dann hat sich das Fahrzeug auf der Seite/dem Dach stabilisiert, sind sie nicht mehr (beide) erfüllt, kann davon ausgegangen werden, dass sich das Fahrzeug weder in Dachlage noch in Seitenlage befindet, sondern sich wieder auf den Rädern (d.h. in Normalposition) befindet.

Eine weitere Möglichkeit zur Verbesserung der Fahrzeugzustandserkennung über Beschleunigungssensoren wäre die Definition von Maximal- bzw. Minimalradien, bezogen auf einen definierten Kreis. Der aktuelle Radius für die Lateral- und Vertikalwerte lässt sich durch den Pythagoras aus y- und z- Vektor leicht berechnen. Befindet sich der errechnete Radius (d.h. die Lagewerte) in einem ringförmigen Minimal-Maximalband, wie es durch das Band 330 in Fig. 3 dargestellt ist, kann über vorstehend genannten Schwellwerte der Fahrzeugzustand bestimmt werden. Die Limitierung (d.h. der Vertrauensbereich der Signale) wird damit schon über die Definition des inneren und äußeren Kreises bestimmt. Hierdurch kann eine Plausibilisierung der von den Beschleunigungssensoren gelieferten Signale erfolgen, so dass eine fehlerhafte Bereitstellung von Beschleunigungssensorsignalen nicht zu einer Auslösung der Sicherheitsmittel führt.

Fig. 4 zeigt ein Ablaufdiagramm eines Ausführungsbeispiels der vorliegenden Erfindung als Verfahren. Das Verfahren 400 zur Erkennung einer Seiten- und/oder Dachlage eines Fahrzeugs ist in einem Fahrzeug ausführbar, das einen Lateral-Beschleunigungssensor aufweist, der ausgebildet ist, um eine laterale Beschleunigung des Fahrzeugs zu bestimmen und einen entsprechenden Lateralwert auszugeben. Ferner ist das Verfahren 400 in einem Fahrzeug ausführbar, das einen Vertikal-Beschleunigungssensor aufweist, der ausgebildet ist, um eine vertikale Beschleunigung des Fahrzeugs zu bestimmen und einen entsprechenden Vertikalwert auszugeben. Das Verfahren umfasst einen ersten Schritt des Empfangens 410 des Lateral- und/oder Vertikalwerts. In einem zweiten Schritt 420 erfolgt ein Erkennen der Dachlage des Fahrzeugs, wenn ein aus dem Vertikalwert abgeleiteter Lagewert zumindest in einer Komponente absolut größer ist, als ein vorbestimmter Vertikalschwellenwert und/oder Erkennen der Seitenlage des Fahrzeugs, wenn sich ein aus dem Vertikalwert und dem Lateralwert abgeleiteter Lagewert in einem Seitenlagebereich eines Zustandsraumes befindet, wobei der Zustandsraum durch Achsen bezüglich einer lateralen und einer vertikalen Beschleunigung aufgespannt ist.

## Patentansprüche

1. Verfahren (400) zur Erkennung einer Seiten- und/oder Dachlage eines Fahrzeugs (100), wobei das Verfahren (400) die folgenden Schritte umfasst:

   - Empfangen (410) eines Lateral- (130) und/oder Vertikalwerts (150) über eine Schnittstelle, wobei der Lateralwert eine Lateralbeschleunigung repräsentiert und/oder der Vertikalwert eine Vertikalbeschleunigung repräsentiert;
   - Erkennen (420) der Dachlage des Fahrzeugs (100), wenn der Vertikalwert (150) oder ein aus dem Vertikalwert (150) abgeleiteter Lagewert (200) zumindest in einer Komponente absolut größer ist, als ein vorbestimmter Vertikalschwellenwert (230) und/oder
   Erkennen der Seitenlage des Fahrzeugs (100), wenn sich ein aus dem Vertikalwert (150) und dem Lateralwert (130) abgeleiteter Lagewert (200) in einem Seitenlagebereich (300, 310, 320) eines Zustandsraumes befindet, wobei der Zustandsraum durch Achsen (210, 220) bezüglich einer lateralen und einer vertikalen Beschleunigung aufgespannt ist,
wobei der Lagewert (200) unter Verwendung einer Kreisgleichung ((2)) bestimmt wird und im Zustandsraum eine Kreisbahn beschreibt.

2. Verfahren (400) gemäß Anspruch 1, **dadurch gekennzeichnet, dass** im Schritt des Erkennens (420) der Seitenlage ein Seitenlagebereich (300, 310, 320) im Zustandsraum verwendet wird, dessen Komponenten in Richtung einer vertikalen Beschleunigung einen geringeren absoluten Wert als den Vertikalschwellenwert (230) aufweisen.

3. Verfahren (400) gemäß einem der Ansprüche 1 bis 2, **dadurch gekennzeichnet, dass** im Schritt des Erkennens (420) der Seitenlage ein in einen ersten (310) und einen zweiten (320) Teilbereich geteilter Seitenlagebereich (300, 310, 320) verwendet wird, um das Fahrzeug auf der erste Seite liegend zu erkennen, wenn sich der Lagewert (200) im ersten Teilbereich (310) befindet und um das Fahrzeug auf der der ersten Seite gegenüberliegenden zweiten Seite liegend zu erkennen, wenn sich der Lagewert (200) im zweiten Teilbereich (320) befindet, wobei die Komponenten des ersten Teilbereichs (310) in Richtung der lateralen Beschleunigung ein anderes Vorzeichen aufweisen, als die entsprechenden Komponenten des zweiten Teilbereichs (320).

4. Verfahren (400) gemäß einem der Ansprüche 1 bis 3, **dadurch gekennzeichnet, dass** im Schritt des Erkennens (420) ein Lagewert (200) verwendet wird, bei dem ein Lateral-Offsetwert zum Lateralwert (130) berücksichtigt wird und/oder bei dem ein Vertikal-Offsetwert zum Vertikalwert (150) berücksichtigt wird.

5. Verfahren (400) gemäß einem der Ansprüche 1 bis 4, **dadurch gekennzeichnet, dass** im Schritt des Erkennens (420) die Seitenlage dann erkannt wird, wenn sich der Lagewert (200) für eine vorbestimmte Seitenlage-Zeitdauer in dem Seitenlagebereich (300, 310, 320) des Zustandsraumes befindet und/oder dass die Dachlage dann erkannt wird, wenn der Vertikalwert (150) oder Lagewert (200) für eine vorbestimmte Dachlage-Zeitdauer in zumindest einer Komponente einen Wert annimmt, der größer als der Vertikalschwellenwert (230) ist.

6. Verfahren (400) gemäß Anspruch 5, **dadurch gekennzeichnet, dass** im Schritt des Erkennens (420) eine aufrechte Position des Fahrzeugs erkannt wird, wenn sich der Lagewert (200) zwar im Seitenlagebereich (300, 310, 320) befunden hat aber sich nach der vorbestimmten Seitenlage-Zeitdauer nicht mehr im Seitenlagebereich (300, 310, 320) befindet und/oder wenn der Lagewert (200) zwar in zumindest einer Komponente einen Wert angenommen hat, der größer als der Vertikalschwellenwert (230) war, aber nach der vorbestimmten Dachlage-Zeitdauer in der zumindest einen Komponente einen Wert angenommen hat, der nicht mehr größer als der Vertikalschwellenwert (230) ist.

7. Verfahren (400) gemäß einem der Ansprüche 1 bis 6, **dadurch gekennzeichnet, dass** im Schritt des Erkennens (420) der Seitenlage und/oder des Erkennens der Dachlage die Seitenlage und/oder die Dachlage nur dann erkannt werden, wenn sich der Lagewert (200) innerhalb eines vordefinierten ringförmigen Bereichs (330) im Zustandsraum befindet..

8. Verfahren (400) gemäß einem der Ansprüche 1 bis 7, **dadurch gekennzeichnet, dass** ferner ein Schritt des Aktivierens einer Sicherheitsfunktion vorgesehen ist, wenn im Schritt des Erkennens (420) eine Seitenlage oder eine Dachlage des Fahrzeugs (100) erkannt wurde.

9. Verfahren (400) gemäß einem der Ansprüche 1 bis 8, **dadurch gekennzeichnet, dass** im Schritt des Empfangens (410) des Lateral- (130) und/oder Vertikalwertes (150) das Empfangen dieser Werte von einem Wertespeicher für den Lateral- (130) und/oder Vertikalwert (150) erfolgt.

10. Computerprogramm mit Datenverarbeitungsanlage zur Durchführung von Schritten des Verfahrens (400) gemäß einem der Ansprüche 1 bis 9, wenn das Computerprogramm mit Datenverarbeitungsanlage auf einer Datenverarbeitungsanlage ausgeführt wird.

11. Steuergerät mit Einrichtungen zur Durchführung des Verfahrens (400) gemäß einem der vorstehenden Ansprüche.

**Claims**

1. Method (400) for detecting a lateral position and/or roof position of a vehicle (100), wherein the method (400) comprises the following steps:

- receiving (410) a lateral value (130) and/or vertical value (150) via an interface, wherein the lateral value represents a lateral acceleration and/or the vertical value represents a vertical acceleration;
- detecting (420) the roof position of the vehicle (100) if the vertical value (150) or a position value (200) derived from the vertical value (150) at least in one component is larger in absolute terms than a predetermined vertical threshold value (230) and/or

detecting the lateral position of the vehicle (100) if a position value (200) derived from the vertical value (150) and the lateral value (130) is located in a lateral position region (300, 310, 320) of a state space, wherein the state space is extended through axes (210, 220) relating to lateral acceleration and vertical acceleration, wherein the position value (200) is determined using a circular equation (2) and a circular path is described in the state space.

2. Method (400) according to Claim 1, **characterized in that** in the step of detecting (420) the lateral position a lateral position region (300, 310, 320) in the state space is used whose components have a smaller absolute value in the direction of a vertical acceleration than the vertical threshold value (230).

3. Method (400) according to one of Claims 1 to 2, **characterized in that** in the step of detecting (420) the lateral position a lateral position region (300, 310, 320) which is divided into a first partial region (310) and a second partial region (320) is used to detect the vehicle lying on the first side if the position value (200) is in the first partial region (310), and to detect the vehicle lying on the second side opposite the first side if the position value (200) is in the second partial region (320), wherein the components of the first partial region (310) have a different sign in the direction of the lateral acceleration than the corresponding components of the second partial region (320).

4. Method (400) according to one of Claims 1 to 3, **characterized in that** in the step of detecting (420) a position value (200) is used in which a lateral offset value with respect to the lateral value (130) is taken into account, and/or in which a vertical offset value with respect to the vertical value (150) is taken into account.

5. Method (400) according to one of Claims 1 to 4, **characterized in that** in the step of detecting (420) the lateral position is detected if the position value (200) for a predetermined lateral position time period is located in the lateral position region (300, 310, 320) of the state space, and/or **in that** the roof position is detected when the vertical value (150) or position value (200) assumes, for a predetermined roof position time period in at least one component, a value which is greater than the vertical threshold value (230).

6. Method (400) according to Claim 5, **characterized in that** in the step of detecting (420) an upright position of the vehicle is detected if the position value (200) was located in the lateral position region (300, 310, 320) but is no longer located in the lateral position region (300, 310, 320) after the predetermined lateral position time period, and/or if in at least one component the position value (200) has assumed a value which was larger than the vertical threshold value (230) but in the at least one component has assumed a value which is no longer larger than the vertical threshold value (230) after the predetermined roof position time period.

7. Method (400) according to one of Claims 1 to 6, **characterized in that** in the step of detecting (420) the lateral position and/or of detecting the roof position the lateral position and/or the roof position are detected only if the position value (200) is located within a predefined annular region (330) in the state space.

8. Method (400) according to one of Claims. 1 to 7, **characterized in that** a step of activating a safety function is also provided if in the step of detecting (420) a lateral position or a roof position of the vehicle (100) was detected.

9. Method (400) according to one of Claims 1 to 8, **characterized in that** in the step of receiving (410) the lateral value (130) and/or vertical value (150), these values are received by a value memory for the lateral value (130) and/or vertical value (150).

10. Computer program having a data processing system for carrying out steps of the method (400) according to one of Claims 1 to 9 if the computer program having a data processing system is run on a data processing system.

11. Control unit having devices for carrying out the method (400) according to one of the above claims.

**Revendications**

1. Procédé (400) de détection du renversement latéral et/ou du capotage d'un véhicule (100), le procédé (400) comprenant les étapes suivantes :

   - réception (410) d'une valeur latérale (130) et/ou d'une valeur verticale (150) via une interface, la valeur latérale représentant une accélération latérale et/ou la valeur verticale représentant une accélération verticale ;
   - détection (420) du capotage du véhicule (100) lorsque la valeur verticale (150) ou une valeur de position (200) découlant de la valeur verticale (150) est plus importante en valeur absolue, au moins pour une composante, qu'une valeur verticale seuil (230) prédéterminée ; et/ou
   - détection de la position latérale du véhicule (100) lorsqu'une valeur de position (200) découlant de la valeur verticale (150) et de la valeur latérale (130) se trouve dans une plage de position latérale (300, 310, 320) d'une plage d'états, la plage d'états étant serrée par les axes (210, 220) par rapport à une accélération latérale et une accélération verticale ;
   la valeur de position (200) étant déterminée par l'utilisation d'une équation circulaire ((2)) et décrivant une trajectoire circulaire dans la plage d'états.

2. Procédé (400) selon la revendication 1, **caractérisé en ce que** lors de l'étape de détection (420) de la position latérale, une plage de position latérale (300, 310, 320) est utilisée dans la plage d'états dont les composantes présentent, en direction d'une accélération verticale, une valeur absolue davantage réduite que la valeur verticale seuil (230).

3. Procédé (400) selon l'une quelconque des revendications 1 à 2, **caractérisé en ce que** lors de l'étape de détection (420) de la position latérale, une plage de position latérale (300, 310, 320) divisée en une première plage partielle (310) et une deuxième plage partielle (320) est utilisée pour détecter la position horizontale du véhicule sur le premier côté lorsque la valeur de position (200) se situe dans la première plage partielle (310) et pour détecter la position horizontale du véhicule sur le deuxième côté opposé au premier côté lorsque la valeur de position (200) se situe dans la deuxième plage partielle (320), les composantes de la première plage partielle (310) comprenant, en direction de l'accélération latérale, un autre signe que les composantes correspondantes de la deuxième plage partielle (320).

4. Procédé (400) selon l'une quelconque des revendications 1 à 3, **caractérisé en ce que** lors de l'étape de détection (420), une valeur de position (200) est utilisée pour laquelle une valeur de décalage latéral par rapport à la valeur latérale (130) est prise en compte et/ou pour laquelle une valeur de décalage vertical par rapport à la valeur verticale (150) est prise en compte.

5. Procédé (400) selon l'une quelconque des revendications 1 à 4, **caractérisé en ce que** lors de l'étape de détection (420), la position latérale est détectée lorsque la valeur de position (200) se trouve pendant une durée de position latérale prédéfinie dans la plage de position latérale (300, 310, 320) de la plage d'états et/ou que le capotage est détecté lorsque la valeur verticale (150) ou la valeur de position (200) prend, pour au moins une composante, une valeur supérieure à la valeur verticale seuil (230) pendant une durée de capotage prédéterminée.

6. Procédé (400) selon la revendication 5, **caractérisé en ce que** lors de l'étape de détection (420), une position verticale du véhicule est détectée lorsque la valeur de position (200) se situe certes dans la plage de position latérale (300, 310, 320) mais, après la durée de position latérale prédéterminée, plus dans la plage de position latérale (300, 310, 320) et/ou lorsque la valeur de position (200) prend certes, au moins pour une composante, une valeur supérieure à la valeur verticale seuil (230) mais, après la durée de capotage prédéterminée, une valeur inférieure ou égale à la valeur verticale seuil (230) pour l'au moins une composante.

7. Procédé (400) selon l'une quelconque des revendications 1 à 6, **caractérisé en ce que** lors de l'étape de détection (420) de la position latérale et/ou de détection du capotage, la position latérale et/ou le capotage ne sont détectés que lorsque la valeur de position (200) se situe à l'intérieur d'une plage annulaire (330) prédéfinie dans la plage d'états.

8. Procédé (400) selon l'une quelconque des revendications 1 à 7, **caractérisé en ce qu'**on prévoit en outre une étape d'activation d'une fonction de sécurité lorsqu'une position latérale ou un capotage du véhicule (100) sont détectés lors de l'étape de détection (420).

9. Procédé (400) selon l'une quelconque des revendications 1 à 8, **caractérisé en ce qu'**à l'étape de réception (410) de la valeur latérale (130) et/ou de la valeur verticale (150), la réception de ces valeurs est réalisée via une mémoire de valeur comprenant la valeur latérale (130) et/ou la valeur verticale (150).

10. Programme informatique doté d'une installation de traitement de données servant à la mise en oeuvre des étapes du procédé (400) selon l'une quelconque des revendications 1 à 9 lorsque le programme informatique doté d'une installation de traitement de données est réalisé sur une installation de traitement de données.

11. Appareil de commande doté de dispositifs servant à la mise en oeuvre du procédé (400) selon l'une quelconque des revendications précédentes.

**Fig. 1**

**Fig. 2**

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006019316 A1
- DE 102004031665 A1

- WO 0179036 A